# EUROPÄISCHE PATENTANMELDUNG

(11) **EP 4 821 365 A1**
(43) Veröffentlichungstag der Anmeldung: **14.10.2026**
(21) Anmeldenummer: 25169263.8
(22) Anmeldetag: 08.04.2025
(51) Int. Cl.: A23L 2/38, A23L 33/105, A23L 33/135, C12G 3/024

(54) **FERMENTIERTE GETRÄNKE AUS PFLANZEN & SUPERFOODS UND HERSTELLUNGSPROZESS**

(71) Anmelder: Dongmo, Sorelle, 61449 Steinbach (DE)
(72) Erfinder: Dongmo, Sorelle, 61449 Steinbach (DE)

(57) **Zusammenfassung**

Die vorliegende Erfindung beschreibt ein Verfahren zur Herstellung von fermentierten Getränken aus der Kombination von Adaptogenen, Superfoods und Fruchtsäften durch Milchsäure Fermentation. Die Fermentation erfolgt unter Verwendung von mindestens Milchsäurebakterien und/oder Pilze. Die Erfindung basiert auf aktuellen wissenschaftlichen Erkenntnissen über die wertvolle aktive Ingredienten von Superfoods, Adaptogenen zusammen mit den Vorteilen der Milchsäure Fermentation.

## Beschreibung

Die vorliegende Erfindung betrifft die Herstellung von alkoholfreies, fermentierten Getränken unter Verwendung von Adaptogenen Pflanzenstoffen und Superfoods kombiniert mit Fruchtsäften. Diese Getränke weisen sowohl gesunde Vorteile als auch sensorische Qualitäten auf, die sie zu einer innovativen Alternative Getränke machen. Die Herstellung solcher Getränke erfolgt durch eine Milchsäure Gärung.

### Stand der Technik

Fermentierte Getränke haben in den letzten Jahren aufgrund ihrer gesunden Vorteile zunehmend an Popularität gewonnen. Sie sind insbesondere für ihre positiven Effekte auf das Mikrobiom und das Immunsystem bekannt. Die Fermentation von Fruchtsäften und pflanzlichen Produkten ist eine lang etablierte Methode zur Herstellung von nicht-alkoholischen Getränken. Traditionelle fermentierte Produkte wie Kefir, Kombucha und Sauerkraut bieten zahlreiche gesundheitliche Vorteile durch ihre probiotischen Eigenschaften. Die Milchsäurebakterien, die in diesen Fermentationsprozessen verwendet werden, sind bekannt dafür, Laktat zu produzieren und das Wachstum von pathogenen Bakterien zu hemmen, wodurch die Haltbarkeit der Produkte verlängert wird.

Adaptogene sind Substanzen pflanzlichen Ursprungs, die dem Körper helfen, sich an Stressfaktoren anzupassen und das allgemeine Wohlbefinden zu fördern. Superfoods, wie beispielsweise Chiasamen, Spirulina oder Acai-Beeren, sind reich an Nährstoffen und Antioxidantien und bieten zusätzliche gesundheitliche Vorteile. Die Kombination dieser Superfoods und Adaptogene in einem fermentierten Getränk ist eine innovative Idee, die bislang nicht umfassend wissenschaftlich erfasst wurde.

Verschiedene Patente beschreiben Verfahren zur Fermentation von Fruchtsäften und Gemüsesäften unter Verwendung von probiotischen Bakterienstämmen. Die Fermentation verbessert die Nährstoffaufnahme und trägt zur Erzeugung von probiotischen und gesundheitsfördernden Effekten bei. Die patentierte Technologie bieten ein Verfahren zur Herstellung von alkoholfreien, probiotischen Getränken, die nicht nur geschmacklich ansprechend sind, sondern auch positive Auswirkungen auf das Mikrobiom haben. Die Verwendung von Adaptogenen und Superfoods wird in diesem Patent nicht behandelt.

Die Patente und wissenschaftliche Veröffentlichungen, die die Fermentation von Adaptogenen und Superfoods betrachten, beziehen sie sich auf die Verwendung von Pilzen oder die Kombination aus Milchsäurebakterien und Hefe für die Herstellung von Pulver. Es werden allerdings keine spezifischen Anwendungen von Adaptogenen oder Superfoods in der Fermentation behandelt.

### Aufgabe

Die Kombination von Adaptogenen Pflanzenstoffen und Superfoods in einem nicht-alkoholischen, fermentierten Getränk stellt eine innovative Lösung für das allgemeine Wohlbefinden. Die beschriebenen Nachteile des Standes der Technik zeigt, dass die Fermentation von Fruchtsäften, Superfoods und Adaptogenen noch nicht in dieser Form umfassend erforscht wurde. Die Erfindung zielt darauf ab, diese Komponenten zu der Nutzung der Wirkung aus den Pflanzen und Fermentation zu bieten.

### Lösung der Aufgabe

Diese Aufgabe wird durch die vorliegende Erfindung durch die Kombination von der geeignete Fermentation für die Herstellung von Getränken nutzbar gemacht werden. Diese innovativen Getränke können in verschiedene form für das allgemeine Wohlbefinde zur Nutzung werden.

Zur Herstellung des erfindungsgemäßen Getränks werden als Ausgangsstoffe wertvolle Pflanzen- und Pilzrohstoffe eingesetzt. Dabei umfasst nicht nur die typischerweise zur Extraktion genutzten Pflanzenteile, sondern auch sämtliche übrigen Teile, die bei der Gewinnung der Pflanzen oder anderer wertvoller Inhaltsstoffe anfallen. Diese Materialien werden in unterschiedlichen Mischungen verwendet, um ein breites Spektrum an wertvolle Komponenten sowie variablen Geschmacksprofilen zu erzielen.

### Hierzu zählen:

- Blüten, Blütenblätter, Samen
- Schalen, Stängel, Stiele, Zweige
- Wurzeln, Wurzelstöcke, Zwiebeln, Blätter

**Tabelle 1: Übersicht über die Pflanzen- und Pilzrohstoffe**

| **Rohstoff** | **Wissenschaftlicher Name** |
|---|---|
| Ashwagandha | *Withania somnifera* |
| Moringa | *Moringa oleifera* |
| Hopfen | *Humulus lupulus* |
| Baldrian | *Valeriana officinalis* |
| Baobab | *Adansonia digitata* |
| Maca | *Lepidium meyenii* |
| Wermut | *Artemisia absinthium* |
| Ginseng | *Panax ginseng* |
| Safran | *Crocus sativus* |
| Zitronenmelisse | *Melissa officinalis* |
| Damiana | *Turnera diffusa* |
| Guayusa | *Ilex guayusa* |
| Chaga | *Inonotus obliquus* |
| Lion's Mane | *Hericium erinaceus* |
| Maitake | *Grifola frondosa* |
| Gingko | *Ginkgo biloba* |
| Cordyceps | *Cordyceps sinensis* |
| Polygonum | *Polygonum multiflorum* |
| Reishi | *Ganoderma lucidum* |
| Spitzwegerich | *Plantago lanceolata* |
| Hericum | *Hericium sp.* |
| Dandelion | *Taraxacum officinale* |
| Holy basil | *Ocinum tenuiflorum* |
| Ashwagandha | *Withania somnifera* |
| Tausendguldenkraut | *Centarium erythraea* |
| Golden root | *Rhodiola rosea* |

Ausführungsvariante 1: Standardverfahren zur Herstellung von alkoholfreien fermentierten Getränken auf Basis von Adaptogene, Superfoods und Vitalpilze

### Herstellung der Fermentationsmedium

Zunächst wird ein Fermentationsmedium aus mindestens einem der in Tabelle 1 genannten Rohstoffe gewonnen. Beispielsweise können Adaptogene Pflanzen (wie Ashwagandha) allein oder zusammen mit weiterer Pflanzenrohstoffe in verschiedene mögliche Verhältnisse und Kombinationen eingesetzt werden. Die Rohstoffe werden in der Form von Pulver, oder in ganzen und anschließend durch Extraktion in einem wässrigen Medium oder einer Lösung aus der Tabelle 2 bei Temperaturen bis 100° C (bevorzugt 0 - 85° C) für 0 - 96h in verschiedene Verhältnisse. Zudem wird mindestens einem Reinigungs- und/oder einem Sterilisationsschritt unterzogen.

Das Fermentationsmedium kann eine Mischung aus einer wässrigen Flüssigphase und einer dispergierte Festphase, wobei dispergierte Festphase aus Zellen und/oder Zellbestandteilen und/oder Zellenagglomeraten besteht. Die Zellen Agglomerate können auch ganze Blüten, ganze Blütenblätter, ganze Stängel, ganze Stiele, ganze Zweige, ganze Wurzel, ganze Wurzelstöcke, ganze Zwiebeln, ganze Blätter, Pulver oder Kräuter und Gewürze sein.

Das Fermentationsmedium kann mit verschieden Fruchtsäften (insbesondere Apfelsaft, Traubensaft, Zitronensaft, Ananassaft, Quittensaft, Stachelbeersaft, Pfirsichsaft, Birnensaft) und formen (Direktsaft, Konzentrat, Karamellisierter Fruchtsaft, Fruchtstücke/Püree, Fruchtwürze, fermentierter Fruchtsäfte, Gefriertrockener Fruchtsaft, Fruchtextrakt) vermischt werden.

**Tabelle 2: Übersicht über die Extraktionsmedium**

| |
|---|
| reiner Fruchtsaft |
| Frucht-Wasser-Mischung (verschiedene Verhältnisse) |
| Fruchtsaftkombinationen |
| pH-adjustierter Fruchtsaft |
| Wasser & angereichertes Wasser |
| Honig/honig-basierte Lösung |
| Fermentierte Substrate (z. B. Essig, fruchtsäftebasierte Fermentate) |

### Fermentationsprozess

Das Fermentationsmediums ist mit mindestens einem Stamm aus Tabelle 3 durchgeführt, nicht ausgeschlossen ist eine spontane Fermentation. Die Fermentation wird bei Temperaturen zwischen 0° C und 65° C über einen Zeitraum von 1 bis 312h durchgeführt. Die Gewinnung des Fermentationsmediums erfolgt durch zumindest teilweise Abtrennung der wässrigen Flüssigphase des Fermentationsmediums von der Festphase des Fermentationsmediums, wobei die Abtrennung durch mindestens ein Verfahren erfolgt, ausgewählt aus der Liste umfassend Sieben, Dekantieren, Filtrieren, Zentrifugieren. Dieser stellt in einer ersten Ausgestaltung das erfindungsgemäße Getränk dar.

**Tabelle 3: ausgewählte Milchsäurebakterienstämme und Pilze**

| |
|---|
| *Lactobacillus casei* |
| *Lactobacillus amylolyticus* |
| *Lactobacillus paracasei* |
| *Leuconostoc mesenteroides* |
| *Lactobacillus brevis* |
| *Pediococcus pentosaceus* |
| *Lactobacillus acidophilus* |
| *Lactobacillus rhamnosus* |
| *Bifidobacterium bifidum* |
| *Weissella cibaria*/*confusi* |
| *Lactobacillus helveticus* |
| *Bifidobacterium breve* |
| *Lactobacillus fermentum* |
| *Lactobacillus reuteri* |
| *Bifidobacterium longum* |
| *Lactococcus lactis* |
| *Bifidobacterium lactis* |
| *Streptococcus thermophilus* |
| *Lactobacillus cerevisiae* |
| *Bifidobacterium animalis* |
| *Lactobacillus parakefir* |
| *Lactobacillus plantarum* |
| *Lactobacillus paracasei* |
| *Enterocccus faecum* |
| *Lactobacillus delbrueckii subsp. bulgaricus* |
| *Pediococcus acidilactici* |
| *Aspergillus sojae* |
| *Asergillus niger* |
| *Aspergillus oryzae* |
| *Rhizopus oligosporus* |
| *Monascus purpureus* |

### Verarbeitung und Abfüllung

Nach der Fermentation wird das gewonnene fermentative Extrakt mindestens einem Reinigungs- Abtrennung- und/oder einem Sterilisationsschritt direkt oder in die Flasche unterzogen. Das finale Getränk kann noch lebendige Mikroorganismen enthalten oder nicht, kann klar oder trüb sein als auch mit weiterer aktiver Komponente eingereicht werden und/oder aromatisiert und/oder carbonisiert. Die können in Plastik- Glasflaschen oder Dose abgefüllt.

## Patentansprüche

1. Verfahren zur Herstellung eines alkoholfreien, fermentierten Getränkes, umfassend die Schritte:
a) Herstellung einer Fermentationsmedium aus mindestens Adaptogenen & Pflanzenrohstoffen und mindestens aus Kräuter und Gewürze gewonnen wird, die unter anderem Ashwagandha (*Withania somnifera*), Moringa (*Moringa oleifera*)*,* Hopfen (Humulus lupulus), Baldrian ( *Valeriana officinalis*), Baobab (*Adansonia digitata*), Maca (*Lepidium meyenii*), Wermut (*Artemisia absinthium*), Ginseng (*Panax ginseng*), Lion's mane (*Hericium erinaceus*), Reishi (*Ganoderma lucidum*) und Safran (*Crocus sativus*) umfassen, wobei die Rohstoffe mechanisch zerkleinert und in einem Extraktionsmedium bei Temperaturen unter 100° C eingesetzt;
b) Bereitstellung eines Fermentationsmediums, das die in (a) aus einem Zweiphasensystem besteht (wässrige Flüssigphase und dispergierte Festphase, die mindestens einer der stammenden Pflanzenteile - z. B. Blüten, Blütenblätter, Staubbeutel, Schalen, Stängel, Stiele, Zweige, Wurzeln, Wurzelstöcke, Zwiebeln, Blätter - enthalten sind) kombiniert;
c) Fermentation des Mediums mit mindestens eine ausgewählte Milchsäurebakterie und Pilze, eine spontane Fermentation ist nicht ausgeschlossen. Ausgewählt aus der Liste umfasst der Stämme *L. casei, L. brevis, L. delbrueckii subsp. Bulgaricus, L. amylolyticus, P. pentosaceus, L. mesenteroides, L. fermentum, B. bifidum, L. rhamnosus, W. cibaria, L. reuteri, L. plantarum, p. pentosaceus, L. helveticus, B. breve, S. thermophilus, L. paracasei, L. acidophilus, B. animalis, P. acidilacti, B. longum, L. mesenteroides. L. cerevisiae, L. parakefir, A. oryzae, E. faecum, A. sojae, A. niger, R. oligosporus, M. purpureus*
d) Gewinnung eines fermentativen Extrakts durch zumindest Abtrennung der wässrigen Flüssigphase von der Festphase des Fermentationsmediums durch mindestens ein Verfahren davon Sieben, Dekantieren, Zentrifugieren, Filtrieren.
e) Weiterverarbeitung des fermentativen Extrakts, zur Herstellung eines alkoholfreien, fermentierten Getränks.

2. Verfahren nach Anspruch 1, wobei als fermentative Extrakt Fruchtsäfte und/oder Zucker oder aus einer anderen Form verwendet wird.

3. Verfahren nach Anspruch 1 oder 2, **dadurch gekennzeichnet, dass** das Fermentationsmedium als Zweiphasensystem vorliegt, wobei die dispergierte Festphase die zerkleinerten Pflanzenteile in variabler Zusammensetzung enthält.

4. Verfahren nach Anspruch 1 bis 3, **dadurch gekennzeichnet, dass** die Fermentation bei Temperaturen zwischen 0° C und 65° C (bevorzug 4 - 55° C; besonders bevorzugt 4 - 50° C) über einen Zeitraum von 1 bis 312h (bevorzugt 5 - 288h; besonders bevorzugt 8 - 240h) liegt. Die pH-Wert liegt im Bereich 1,0 bis 9,0 (bevorzugt 1,4 bis 8,0; besonders bevorzugt 1,8 bis 7,2).

5. Verfahren nach einem der vorangehenden Ansprüche, wobei der fermentative Extrakt optional einer Nachbehandlung unterzogen wird, die mindestens eine der folgenden Maßnahmen umfasst:
a) Reinigung oder Sterilisationsschritte
a) eine Hitzebehandlung (z. B. bei ca. 50 - 90° C für 0,1 - 120 Minuten),
b) Aromatisierung
c) Nachreichung mit aktiven Wirkstoffen
d) Abfüllung
e) Flaschengärung
f) kontrollierte Carbonisierung durch Zugabe von CO₂.

6. Alkoholfreies, fermentiertes Getränk, hergestellt durch das Verfahren gemäß einem der Ansprüche 1 bis 5.

7. Verwendung eines fermentativen Extrakts, hergestellt nach dem Verfahren gemäß einem der Ansprüche 1 bis 6, zur Herstellung eines alkoholfreien, fermentierten Getränks, wobei aus dem fermentativen Extrakt weitere Ausgestaltungen des Getränks hergestellt werden könnte.
